(19) Europäisches Patentamt
European Patent Office
Office européen des brevets

(11) **EP 3 755 593 B1**

(12) **FASCICULE DE BREVET EUROPEEN**

(45) Date de publication et mention
de la délivrance du brevet:
**04.09.2024 Bulletin 2024/36**

(21) Numéro de dépôt: **19704636.0**

(22) Date de dépôt: **18.02.2019**

(51) Classification Internationale des Brevets (IPC):
***B60W 30/12*** *(2020.01)* ***G06V 20/56*** *(2022.01)*

(52) Classification Coopérative des Brevets (CPC):
**B60W 30/12; B60W 50/029; G06V 20/588;
G08G 1/166; G08G 1/167;** B60W 2050/0297;
B60W 2552/30; B60W 2554/00; B60W 2554/80;
B60W 2555/80; B60W 2556/50

(86) Numéro de dépôt international:
**PCT/EP2019/054003**

(87) Numéro de publication internationale:
**WO 2019/162238 (29.08.2019 Gazette 2019/35)**

(54) **DISPOSITIF ET PROCÉDÉ D'AIDE À LA CONDUITE D'UN VÉHICULE AUTOMOBILE**

KRAFTFAHRZEUGFAHRASSISTENZVORRICHTUNG UND -VERFAHREN

MOTOR VEHICLE DRIVING ASSISTANCE DEVICE AND METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.02.2018 FR 1851521**

(43) Date de publication de la demande:
**30.12.2020 Bulletin 2020/53**

(73) Titulaires:
• **Ampere SAS
92100 Boulogne-Billancourt (FR)**
• **NISSAN MOTOR CO., LTD.
Yokohama-shi, Kanagawa 221-0023 (JP)**

(72) Inventeurs:
• **EL HAJ SHHADE, Ghayath
75014 PARIS (FR)**
• **HADDAD, Alain
78180 Montigny le bretonneux (FR)**
• **EL-ZOGHBY, Nicole
78150 LE CHESNAY (FR)**

(74) Mandataire: **Renault Group
Renault s.a.s.
1 avenue du Golf
FR TCR AVA 055
78084 Guyancourt Cedex (FR)**

(56) Documents cités:
EP-A2- 3 127 771    US-A1- 2007 198 188
US-A1- 2009 326 752    US-A1- 2011 022 317

EP 3 755 593 B1

**Description**

L'invention concerne le domaine des dispositifs et des procédés d'aide à la conduite d'un véhicule automobile, en particulier de dispositifs et de procédés visant à limiter le risque de sortie du véhicule d'une voie de circulation sur la chaussée.

Certains véhicules automobiles sont munis d'un système d'avertissement de sortie de voie de circulation, également connu sous la dénomination anglo-saxonne « Lane Departure Warning » ou sous l'acronyme correspondant « LDW ». Un système LDW a pour fonction de comparer une trajectoire réelle du véhicule avec des lignes délimitant une voie de circulation sur la chaussée, afin de détecter un risque de sortie du véhicule de la voie de circulation et d'avertir le conducteur de ce risque, le cas échéant. Par ailleurs, ces mêmes véhicules ou d'autres véhicules automobiles sont munis d'un système d'assistance au maintien dans une voie de circulation, également connu sous la dénomination anglo-saxonne « Lane Keeping Assist » ou sous l'acronyme correspondant « LKA ». Un système LKA diffère d'un système LDW en ce qu'il agit sur un contrôle de direction du véhicule pour corriger la trajectoire du véhicule. Les systèmes LDW et LKA sont dans la présente demande désignés par l'expression générique « dispositif d'aide à la conduite ».

Le document EP 3 127771 décrit un dispositif d'assistance à la conduite comprenant une caméra et un capteur de distance.

Le document US 2007/198188 décrit un système détectant un nombre de voies de circulation et déterminant dans quelle voie de circulation circule un véhicule hôte.

Le document US 2009/326752 décrit un procédé de détection d'une zone de trafic.

Le document US 2011/022317 décrit un système de contrôle de trajectoire.

Lorsqu'une chaussée est mal entretenue, ou que les lignes de délimitation des voies de circulation sur la chaussée ne sont pas renouvelées suffisamment fréquemment, il arrive que ces lignes soient inexistantes ou trop peu visibles pour pouvoir être détectées. Dans ce cas, les dispositifs d'aide à la conduite conventionnels sont automatiquement désactivés. On évite ainsi, dans le cas d'un système LDW, de générer un avertissement conducteur erroné et, dans le cas d'un système LKA, de perturber la trajectoire du véhicule d'une manière inappropriée. La désactivation du dispositif d'aide à la conduite s'accompagne par l'affichage d'un voyant d'avertissement informant le conducteur de l'indisponibilité du dispositif.

Une telle solution n'apporte pas pleine satisfaction, car l'allumage du voyant d'avertissement occasionne un désagrément pour le conducteur et la désactivation du dispositif d'aide à la conduite nuit à la sécurité des occupants du véhicule.

Au vu de ce qui précède, l'invention a pour but de pallier les inconvénients précités liés aux dispositifs d'aide à la conduite.

Plus précisément, l'invention a pour but d'assurer le fonctionnement d'un dispositif d'aide à la conduite même lorsque des lignes de délimitation d'une voie de circulation ne sont plus détectables.

A cet effet, il est proposé un dispositif d'aide à la conduite d'un véhicule automobile, comprenant un détecteur de ligne de délimitation d'une voie de circulation, un module d'établissement apte à établir une voie virtuelle à partir de la ligne détectée, un module de surveillance apte à surveiller un risque de sortie du véhicule automobile de la voie virtuelle établie.

Selon une de ses caractéristiques générales, ce dispositif comprend un module d'acquisition d'une image représentant un objet pertinent, le module d'établissement comprenant une première cartographie contenant des valeurs d'une position de limite de voie virtuelle en fonction d'un décalage latéral de l'objet pertinent sur l'image acquise.

Le dispositif est ainsi rendu plus robuste. En particulier, le dispositif fonctionne même en cas d'impossibilité de la détection d'une ligne de délimitation d'une voie de circulation.

Dans la présente demande, le terme « image » sera compris comme la représentation d'un objet matériel donnée par un système optique. Les images comprennent notamment des pistes, pouvant être le suivi confirmé d'un écho radar ou le suivi confirmé d'une détection par une caméra.

Selon un mode de réalisation, le module d'établissement comprend en outre une deuxième cartographie contenant des valeurs d'une largeur de voie virtuelle en fonction d'un pays de circulation du véhicule.

La deuxième cartographie étant très simple et l'invention ne nécessitant pas l'ajout de composants autres que logiciels, la robustesse du dispositif est ainsi augmentée à moindres coûts.

Dans un autre mode de réalisation, la première cartographie est configurée pour délivrer une valeur de position de limite de voie virtuelle en appliquant la relation :

$$\lim_{adj} = y/2,$$

$$\lim_{opp} = -\lim_{adj},$$

où $\lim_{adj}$ est la position, relativement par rapport à un plan de symétrie transversal du véhicule automobile, d'une limite de voie virtuelle d'un côté adjacent à l'objet pertinent ;

$\lim_{opp}$ est la position d'une limite de voie virtuelle d'un côté opposé à l'objet pertinent relativement par rapport au plan de symétrie transversal, et

y est le décalage latéral de l'objet pertinent par rapport au module d'acquisition.

Avantageusement, la première cartographie est configurée pour modifier la valeur, de préférence pour augmenter la valeur absolue, de la position relativement par rapport au plan de symétrie transversal d'une limite de voie virtuelle d'un côté opposé à l'objet pertinent si la valeur absolue de la position d'une limite de voie virtuelle d'un côté adjacent à l'objet pertinent relativement par rapport au plan de symétrie transversal diminue à un taux de variation inférieur à un seuil prédéfini et/ou si la somme des valeurs absolues des limites de la voie virtuelle est inférieure à une grandeur de sécurité prédéfinie.

Selon l'invention, le module d'acquisition est configuré pour acquérir une pluralité d'images représentant l'objet pertinent, le dispositif comprenant un module de sélection d'un décalage latéral minimal de l'objet pertinent sur la pluralité d'images acquises.

Une telle configuration du module d'acquisition évite de soumettre le dispositif à d'éventuelles fluctuations d'un véhicule en mouvement constituant l'objet pertinent.

On peut en outre prévoir un module de mesure d'une courbure d'un bord de route, ladite première cartographie délivrant différentes valeurs d'une position de limite de voie virtuelle en fonction d'une courbure mesurée par le module de mesure.

De telles caractéristiques permettent un fonctionnement optimal du dispositif lors d'un virage du véhicule automobile.

On peut également prévoir un module de calcul d'un temps avant collision avec un objet pertinent, le module d'établissement étant configuré pour saisir dans la première cartographie, lorsque plusieurs objets pertinents peuvent être utilisés, le décalage latéral de l'objet pertinent ayant le temps avant collision le plus faible.

Ces caractéristiques permettent de limiter le risque de collision avec d'autres véhicules. En outre, si le module d'acquisition est apte à acquérir une image d'un objet pertinent situé relativement loin devant le véhicule, le risque de collision avec des véhicules arrivant en sens inverse sur une voie adjacente est limité.

On peut en outre prévoir un module d'identification apte à détecter une variation du décalage latéral d'un premier bord de route par rapport à un second bord de route.

Un tel module d'identification permet d'identifier une portion d'augmentation du nombre de voies, comme une portion de passage de deux à trois voies, ou une portion de diminution du nombre de voies, comme une portion de passage de trois à deux voies.

Dans un mode de réalisation, le module d'établissement est configuré pour mettre en oeuvre, lorsque le module d'identification détecte une portion de diminution du nombre de voies de circulation, une interpolation du décalage latéral de l'objet pertinent entre un début et une fin de la portion de diminution.

Dans un mode de réalisation, le module d'établissement est configuré pour inhiber le fonctionnement du dispositif lorsque le module d'identification détecte une portion d'augmentation du nombre de voies de circulation, entre un début et une fin de la portion d'augmentation.

Selon un autre aspect, il est proposé un procédé d'aide à la conduite d'un véhicule automobile selon la revendication 9.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 est une vue schématique d'un véhicule automobile incorporant un dispositif d'aide à la conduite selon un aspect de l'invention,
- la figure 2 est une représentation schématique du dispositif d'aide du véhicule de la figure 1,
- la figure 3 représente schématiquement le véhicule de la figure 1 dans une première situation de fonctionnement,
- la figure 4 représente schématiquement le véhicule de la figure 1 dans une deuxième situation de fonctionnement,
- la figure 5 représente schématiquement le véhicule de la figure 1 dans une troisième situation de fonctionnement,
- la figure 6 représente schématiquement le véhicule de la figure 1 dans une quatrième situation de fonctionnement,
- la figure 7 représente schématiquement le véhicule de la figure 1 dans une cinquième situation de fonctionnement, et
- la figure 8 représente un dispositif d'aide à la conduite selon un mode de réalisation en variante de l'invention.

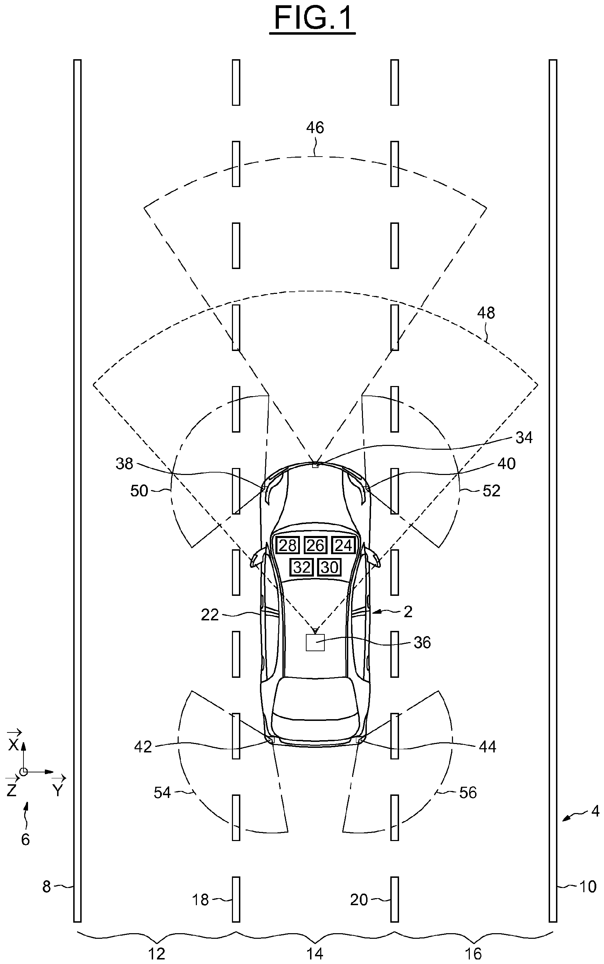

En référence à la figure 1, on a schématiquement représenté un véhicule automobile 2 circulant sur une chaussée 4. On définit une base vectorielle orthonormale directe 6 attachée à la chaussée 4. La base 6 est constituée d'un vecteur $\vec{x}$, d'un vecteur $\vec{y}$ et d'un vecteur $\vec{z}$. Le vecteur $\vec{z}$ est orienté verticalement vers le haut par rapport à la chaussée 4. Les vecteurs $\vec{x}$ et $\vec{y}$ sont contenus dans un plan horizontal par rapport à la chaussée 4. Le vecteur $\vec{x}$ est

longitudinal par rapport à la chaussée 4. Le vecteur $\vec{y}$ est transversal par rapport à la chaussée 4.

Dans la présente demande, les mots « avant », « arrière » seront compris comme se référant à la direction et au sens du vecteur $\vec{x}$. De même, les termes « latéral », « transversal », « gauche » et « droite » seront compris comme se référant au sens et à la direction du vecteur $\vec{y}$. Le côté gauche correspond au côté de l'extrémité d'origine du vecteur $\vec{y}$, le côté droit correspondant au côté de l'extrémité d'arrivée du vecteur $\vec{y}$.

La chaussée 4 est transversalement délimitée par un bord de route gauche 8 et par un bord de route droit 10.

La chaussée 4 est transversalement divisée en trois voies de circulation, en l'espèce une voie de circulation de gauche 12, une voie de circulation centrale 14 et une voie de circulation de droite 16. Les voies 12 et 14 sont délimitées par une ligne de délimitation 18. Les voies 14 et 16 sont délimitées par une ligne de délimitation 20. Dans l'exemple illustré, les lignes de délimitation 18 et 20 sont des lignes blanches discontinues. On peut toutefois envisager des lignes de délimitation différentes, par exemple constituées par des lignes blanches continues, par des lignes de couleur différente ou par d'autres formes discontinues. De même, l'invention ne se limite pas au nombre de voies représentées sur les dessins.

Le véhicule 2 comporte une carrosserie 22, un ordinateur de bord 24, un dispositif de contrôle de la direction 26 et une interface-conducteur 28. Le véhicule 2 comporte par ailleurs un système de géolocalisation mondial 30, également connu sous la dénomination anglo-saxonne « Global Navigation Satellite System » et sous l'acronyme correspondant « GNNS », comme par exemple le « Global Positioning system » connu sous l'acronyme correspondant « GPS ». Le véhicule 2 comporte un module de saisie d'un pays de circulation 32. Le module 32 permet à un opérateur, tel qu'un réparateur chargé de la maintenance du véhicule 2, de saisir un pays dans lequel le véhicule 2 est destiné à circuler.

Le véhicule 2 comporte en outre un radar frontal 34, une caméra frontale 36 et quatre radars de coin 38, 40, 42 et 44. Les composants 34, 36, 38, 40, 42, 44 permettent d'acquérir des images de l'environnement du véhicule 2 dans des zones particulières délimitées sur la figure 1 par des lignes pointillées. Les zones délimitées par des lignes pointillées sur la figure 1 ont volontairement été représentées dans une échelle modifiée pour permettre une meilleure clarté de la figure. Par ailleurs, la position des composants 34, 36, 38, 40, 42, 44 est schématique et on peut sans sortir du cadre de l'invention envisager des positions différentes de ces composants.

Plus particulièrement, le radar 34 a pour fonction de détecter des cibles situées en avant du véhicule 2. Le radar 34 permet en particulier de détecter des cibles situées relativement loin du véhicule 2. Ces cibles peuvent notamment comprendre d'autres véhicules circulant sur la chaussée 4, des panneaux ou encore des obstacles. A cet effet, le radar 34 est disposé dans une calandre (non représentée) du véhicule pour visualiser une zone d'acquisition 46 située en avant du véhicule 2. Le radar 34 peut tout aussi bien être disposé derrière une surface secondaire telle que le pare-chocs ou un logo holographique. La zone 46 est délimitée par une ligne pointillée constituée par une succession de traits longs. La portée du radar 34 est comprise entre 200 m et 300 m, de préférence sensiblement 250 m.

La caméra 36 a pour fonction de détecter et suivre les bords de route 8 et 10. La caméra 36 est disposée au niveau d'un bord avant d'un pavillon du véhicule ou d'une zone centrale en haut du pare-brise afin d'acquérir des images dans une zone d'acquisition 48 schématiquement délimitée sur la figure 1 par une succession de points. La zone d'acquisition 48 est globalement située en avant du véhicule 2. La zone 48 est délimitée par une ligne pointillée constituée par une succession de traits courts. La portée de la caméra frontale 36 est comprise entre 100 m et 150 m, de préférence de l'ordre de 125 m. Il est toutefois possible sans sortir du cadre de l'invention d'utiliser une caméra différente de la caméra 36, par exemple une caméra de portée de l'ordre de 200 m. Il est également possible d'utiliser plusieurs caméras couvrant respectivement l'avant et l'arrière du véhicule 2.

Les radars 38, 40, 42 et 44 ont pour fonction de détecter des cibles situées à des distances relativement proches ou moyenne du véhicule 2. Ces cibles peuvent notamment être d'autres véhicules circulant sur la chaussée 4. Les radars 38, 40, 42, 44 acquièrent des images dans les zones d'acquisition respectives 50, 52, 54, 56 schématiquement représentées sur la figure 1 par des lignes pointillées constituées d'une succession alternée de traits longs et courts. Le radar 38 est placé sur un coin avant-gauche de la carrosserie 22. Le radar 40 est placé sur un coin avant-droit de la carrosserie 22. Le radar 42 est placé sur un coin arrière-gauche de la carrosserie 22. Le radar 44 est placé sur un coin arrière-droit de la carrosserie 22. Les radars 38 et 40 ont une portée de 80 m à 100 m vers l'avant, préférentiellement de l'ordre de 90 m vers l'avant, et une portée de 30 m à 50 m vers le côté, de préférence de l'ordre de 40 m vers le côté. De même, les radars 42 et 44 ont une portée de 80 m à 100 m vers l'arrière, préférentiellement de l'ordre de 90 m, et une portée de 30 m à 50 m vers le côté, préférentiellement de l'ordre de 40 m.

L'invention ne se limite pas à ce choix de moyens d'acquisition d'image. Selon une variante particulière, on peut utiliser une caméra trifocale comprenant un premier capteur avec un angle d'ouverture de 28° et de portée 180 m, un deuxième capteur avec un angle d'ouverture de 52° et de portée 120 m, et un troisième capteur avec un angle d'ouverture de 150° et de portée 60 m.

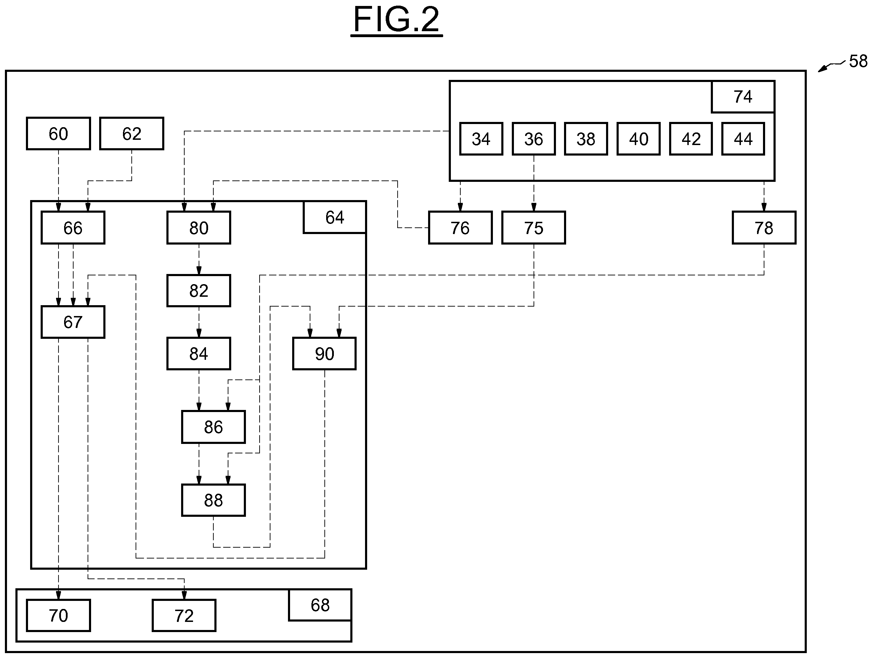

Le véhicule 2 comporte un dispositif d'aide à la conduite 58. Le dispositif 58 est représenté sur la figure 2. Le dispositif d'aide à la conduite 58 assure à la fois une fonction LDW et LKA. Toutefois, on peut bien entendu sans sortir du cadre de l'invention envisager un dispositif d'aide à la conduite ne mettant en oeuvre que l'une de ces deux fonctions.

Le dispositif 58 comprend un détecteur de ligne gauche 60 et un détecteur de ligne droite 62. Les détecteurs 60, 62 sont des capteurs de reconnaissance de ligne respectivement disposés sur un côté gauche, droit de la carrosserie 22. De ce fait, les détecteurs 60 et 62 sont capables de détecter la présence et la position, par rapport à la carrosserie 22, des lignes 18 et 20 respectives. Bien que, dans l'exemple illustré, il soit prévu des capteurs spécifiques pour détecter les lignes 18 et 20, il est possible, sans sortir du cadre de l'invention, d'utiliser les radars 34, 38, 40, 42, 44 ou la caméra 36 pour détecter la présence et la position des lignes 18 et 20. Dans le cas où plusieurs de ces moyens d'acquisition ou de détection sont utilisés pour détecter la présence et la position des lignes 18 et 20, la redondance d'information permet d'augmenter la robustesse du dispositif 58. Lorsque le détecteur 60 est incapable de détecter une ligne de délimitation de voie de circulation, il émet un signal $IMP_{60}$. De même, le détecteur 62 émet un signal $IMP_{62}$ s'il ne détecte pas de ligne de délimitation de voie de circulation.

Le dispositif 58 comporte un module d'établissement 64. Le module 64 a pour fonction d'établir à partir des informations disponibles une voie virtuelle de circulation du véhicule 2. Pour ce faire, le module 64 comporte un premier calculateur 66 en liaison d'informations avec les détecteurs 60 et 62. Le calculateur 66 est capable, à partir des informations recueillies, de déterminer les valeurs de deux positions de limites d'une voie virtuelle. Un deuxième calculateur 67 est en liaison d'informations avec le calculateur 66 et avec l'ordinateur de bord 24 de manière à recueillir une vitesse de déplacement du véhicule 2 et l'actionnement d'un clignotant du véhicule 2. Le calculateur 67 compile les informations recueillies pour établir si le véhicule 2 sort de la voie virtuelle sans que cela corresponde à une intention du conducteur. Si tel est le cas, il existe un risque de sortie du véhicule 2 de la voie 14 et le calculateur 67 émet un signal d'alerte. Pour établir le risque de sortie de la voie virtuelle, le calculateur 67 peut, de manière connue en soi, comparer la trajectoire suivie par le véhicule 2 avec les limites de la voie virtuelle.

Le dispositif 58 comporte un module de surveillance 68. Le module 68 comporte un bloc d'avertissement 70 et un bloc de correction 72. Les blocs 70 et 72 sont en liaison d'informations avec le calculateur 67. Le bloc 70 a pour fonction, lorsque le calculateur 67 émet un signal d'alerte, d'actionner un voyant d'avertissement sur l'interface-conducteur 28. Le bloc 72 a pour fonction, lorsque le calculateur 67 émet un signal d'alerte, de modifier la trajectoire suivie par le véhicule 2 pour faire disparaître le risque de sortie du véhicule 2 de la voie 14. A cet effet, le bloc 72 est muni des moyens matériels et logiciels pour élaborer une consigne de direction corrigée et pour transmettre la consigne de direction corrigée au dispositif de contrôle de la direction 26.

Le dispositif 58 comporte un module d'acquisition 74. Le module 74 comporte le radar 34, la caméra 36 et les radars 38, 40, 42 et 44. De la sorte, le module 74 est capable d'acquérir, sur une période donnée, une pluralité d'images de l'environnement du véhicule dans les zones d'acquisition 46, 48, 50, 52, 54 et 56. Ce faisant, le module 74 établit une modélisation multi-capteurs.

Le dispositif 58 comporte un module de mesure 75. Le module 75 est en liaison d'informations avec la caméra 36. Le module 75 est doté des moyens matériels et logiciels pour déterminer si la chaussée 4 présente un virage et pour, dans un tel cas, mesurer un rayon de courbure Rs du bord de route 8 et un rayon de courbure $R_{10}$ du bord de route 10. Le module 75 calcule en outre la moyenne $R_{8-10}$ des rayons $R_8$ et $R_{10}$. Si la chaussée 4 ne présente pas de virage, le module 75 émet un signal $IMP_{75}$.

Le dispositif 58 comporte un module de calcul 76. Le module 76 est en liaison d'informations avec le module 74, avec l'ordinateur de bord 24 et avec le dispositif de contrôle de la direction 26. Le module 76 a pour fonction de calculer, quel que soit une cible x détectée par le module d'acquisition 74 telle qu'un obstacle ou un autre véhicule, un temps avant collision $TTC_x$ entre le véhicule 2 et la cible x. L'expression « temps avant collision » est également connue sous l'expression anglo-saxonne « Time To Collision » ou sous l'acronyme correspondant « TTC ».

Le dispositif 58 comporte un module d'identification 78. Le module 78 est en liaison d'informations avec le module 74. Plus précisément, le module 78 recueille la position relative des bords de route 8 et 10 par rapport à la carrosserie 22. Le module 78 est ainsi capable de détecter une augmentation ou une diminution de la distance entre les bords de route 8 et 10, et donc de détecter une portion d'augmentation du nombre de voies de circulation ou une portion de diminution du nombre de voies de circulation sur la chaussée 4. Selon une variante, le module 78 peut être informé par une carte intégrée et/ou par le système 30 d'une portion d'augmentation ou de diminution du nombre de voies de circulation sur la chaussée 4.

Le module 64 comporte un bloc minimum 80. Le bloc 80 est en liaison d'informations avec les modules 74 et 76. Le bloc 80 reçoit des images acquises par le module 74 représentant des objets pertinents. Les objets pertinents représentés peuvent par exemple être un autre véhicule automobile circulant sur la chaussée 4, un obstacle, un panneau. Pour chaque objet pertinent, le temps avant collision calculé par le module 76 est associé. Le bloc 80 sélectionne les images représentant l'objet pertinent ayant le temps avant collision le plus faible.

Le module 64 comporte un moyen de calcul 82. Le moyen 82 a pour fonction de mesurer, sur les images sélectionnées par le bloc 80, un décalage latéral y de l'objet pertinent. En l'espèce, le décalage y est mesuré relativement par rapport à un plan de symétrie $P_{symétrie}$ (non représenté) de la carrosserie 22 perpendiculaire au vecteur $\vec{y}$.

Le module 64 comporte un module de sélection 84. Le module 84 est doté des moyens matériels et logiciels pour sélectionner, sur une durée prédéterminée, la valeur minimale du décalage y calculé par le moyen 82. La durée prédéterminée peut être calibrée en fonction de la performance, de la robustesse et de l'expérience du conducteur. Dans l'exemple illustré, la durée prédéterminée est comprise entre 0,5 seconde et 1,5 seconde, et préférentiellement de l'ordre d'une seconde.

Le module 64 comporte un bloc d'interpolation 86. Le bloc 86 est en liaison d'informations avec les modules 84 et 78. Le bloc 86 a pour fonction d'identifier une valeur normale de décalage latéral d'un objet pertinent dans une situation de diminution du nombre de voies sur la chaussée 4. A cet effet, le bloc 86 délivre la valeur du décalage y si le module 78 ne détecte pas une portion de diminution du nombre de voies. Si une portion de diminution du nombre de voies est détectée, le bloc 86 ajoute une valeur $y_{inter}$ au décalage y. La valeur $y_{inter}$ est nulle au début de la portion de diminution. A la fin de la portion de diminution, la valeur $y_{inter}$ égale la valeur du décalage y au début de la portion de diminution. Entre le début et la fin de la portion de diminution, la valeur $y_{inter}$ est déterminée par interpolation entre ses valeurs au début et à la fin de la portion de diminution. Le signal délivré par le bloc 86, correspondant au décalage latéral éventuellement modifié, est noté $y_2$.

Le module 64 comporte un bloc d'inhibition 88. Le bloc 88 est en liaison d'informations avec le bloc 86 et avec le module 78. Le bloc 88 a pour fonction d'inhiber le fonctionnement du dispositif 58 lorsque le véhicule circule sur une portion d'augmentation du nombre de voies de circulation. A cet effet, le bloc 88 délivre la valeur du décalage $y_2$ si le module 78 ne détecte pas de portion d'augmentation du nombre de voies de circulation. Dans le cas contraire, le bloc 88 émet une valeur d'erreur entraînant la désactivation du dispositif 58 et l'activation d'un voyant d'avertissement sur l'interface-conducteur 28.

Le module 64 comporte une cartographie 90 contenant des valeurs de positions de limite $lim_{adj}$ et $lim_{opp}$ en fonction du décalage $y_2$. Les positions $lim_{adj}$ et $lim_{opp}$ correspondent aux limites de la voie virtuelle relativement par rapport au plan $P_{symétrie}$ transversal. La valeur de position $lim_{adj}$ correspond à une limite de la voie virtuelle d'un côté adjacent à l'objet pertinent. La valeur de la position $lim_{opp}$ correspond à une limite de la voie virtuelle d'un côté opposé à l'objet pertinent. La cartographie 90 est en liaison d'informations avec le bloc 88, avec les détecteurs 60 et 62 et avec le module 75.

La cartographie 90 est configurée pour ne délivrer des valeurs que lorsque les détecteurs 60 et 62 sont incapables de détecter les lignes 18 et 20. A cet effet, une valeur n'est délivrée que lorsque l'on saisit dans la cartographie 90 le signal $IMP_{60}$ d'impossibilité de détection émis par le détecteur 60 et le signal $IMP_{62}$ d'impossibilité de détection émis par le détecteur 62. On peut sans sortir du cadre de l'invention envisager une cartographie 90 délivrant des valeurs si l'un seulement des détecteurs 60 et 62 est incapable de détecter une ligne. Dans un tel cas, une valeur n'est délivrée que lorsque l'on saisit dans la cartographie 90 un signal $IMP_{60}$ ou $IMP_{62}$.

Lorsque l'on saisit les signaux $IMP_{60}$, $IMP_{62}$, $IMP_{75}$ et $y_2$ dans la cartographie 90, celle-ci délivre des valeurs $lim_{adj}$ et $lim_{opp}$ en appliquant les relations :

$$lim_{adj} = y_2/2,$$

et

$$lim_{opp} = -lim_{adj}.$$

Dans l'exemple illustré, la cartographie 90 est configurée pour tenir compte de risques liés à une déviation du véhicule constituant l'objet pertinent ou à des fluctuations différentes des limites de la voie virtuelle. Plus précisément, la cartographie 90 est configurée pour délivrer des valeurs de $lim_{adj}$ et $lim_{opp}$ différentes si l'une au moins des conditions suivantes est vérifiée :

$$|y_2| < w_{veh} + 2.w_{cal},$$

$$\frac{d}{dt}\left(|lim_{adj}|\right) < var,$$

ou

$$|lim_{adj}| + |lim_{opp}| < w_{voie\_min},$$

où $w_{veh}$ est la largeur du véhicule automobile, $w_{cal}$ et $w_{voie\_min}$ sont des grandeurs de sécurité prédéfinies et var est un taux de variation négatif prédéfini. La somme $|\lim_{adj}| + |\lim_{opp}|$ correspond à la largeur de la voie virtuelle établie par le module 64.

Si $|y_2| < w_{veh} + 2.w_{cal}$, alors la cartographie 90 émet une valeur d'erreur entraînant la désactivation du dispositif 58 et l'activation d'un voyant d'avertissement sur l'interface conducteur 28.

Si $|y_2| > w_{veh} + 2.w_{cal}$ et $\dfrac{d}{dt}\left(\left|lim_{adj}\right|\right) < \mathrm{var}$ , la cartographie 90 remplace la valeur de limite $\lim_{opp}$ par une nouvelle valeur calculée en appliquant l'équation :

$$\left|lim_{opp}\right| = \frac{w_{voie}}{2},$$

où $w_{voie}$ est une valeur prédéfinie ou délivrée par une cartographie (non représentée) contenant des largeurs standard des voies de circulation en fonction d'un pays de circulation du véhicule.

Si $|y_2| > w_{veh} + 2.w_{cal}$ et $|\lim_{adj}| + |\lim_{opp}| < w_{voie\_min}$, la cartographie 90 remplace la valeur de limite $\lim_{opp}$ par une nouvelle valeur calculée en appliquant les équations :

$$\left|lim_{opp}\right| = -\left|lim_{adj}\right| + w_{voie},$$

$$\mathrm{signe}(lim_{opp}) = \text{-}\mathrm{signe}(lim_{adj})$$

où $w_{voie}$ est une valeur prédéfinie ou délivrée par une cartographie (non représentée) contenant des largeurs standard des voies de circulation en fonction d'un pays de circulation du véhicule.

Lorsque la cartographie reçoit un rayon $R_{8\text{-}10}$ au lieu du signal $IMP_{75}$, la cartographie calcule les valeurs $\lim_{adj}$ et $\lim_{opp}$ en appliquant les équations ci-dessus et module ces valeurs pour que les limites de la voie virtuelle présentent un rayon de courbure égal au rayon $R_{8\text{-}10}$.

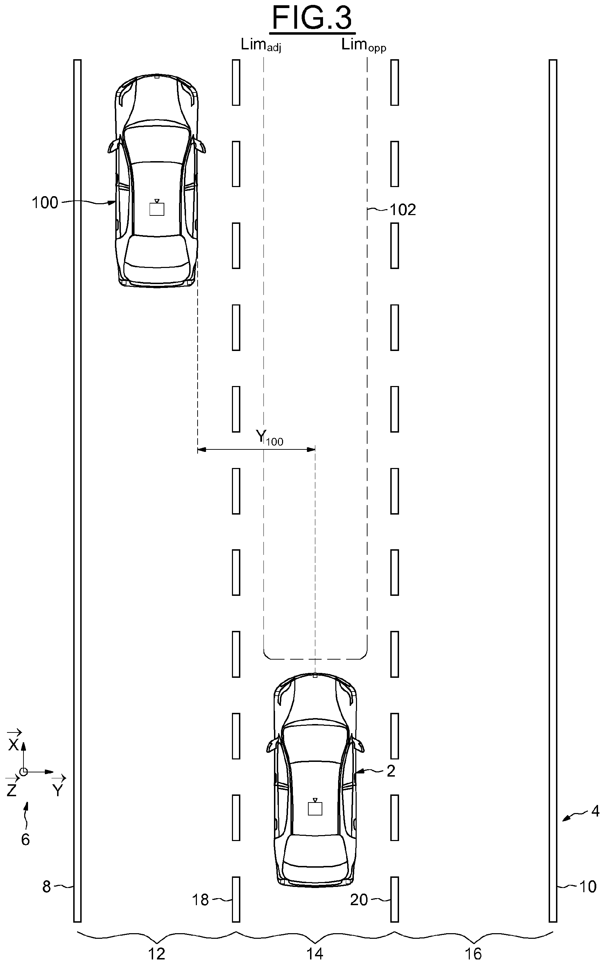

En référence à la figure 3, on a schématiquement représenté le véhicule 2 dans une première situation de fonctionnement. Les éléments identiques portent les mêmes références.

Un autre véhicule automobile 100 circule sur la chaussée 4 sur la voie de circulation 12 et en avant relativement par rapport au véhicule 2. Sensiblement au niveau d'une position longitudinale du véhicule 2, les lignes 18 et 20 sont effacées sur la chaussée 4.

Dans cette situation de fonctionnement, le module 74, en l'espèce la caméra 36 et le radar 38, acquiert des images représentant le véhicule 100. Simultanément, les détecteurs 60 et 62 émettent les signaux $IMP_{60}$ et $IMP_{62}$. Le calculateur 66 est alors désactivé. La chaussée 4 étant en ligne droite, le module 75 émet le signal $IMP_{75}$. Les images acquises par le module 74 sont transmises via le bloc 80 au module 82. Le module 82 calcule le décalage latéral $y_{100}$ du véhicule 100 par rapport au véhicule 2. Les signaux $y_{100}$, $IMP_{60}$, $IMP_{62}$, et $IMP_{75}$ sont transmis via les blocs 86 et 88 à la cartographie 90 qui délivre les valeurs $\lim_{adj}$ et $\lim_{opp}$. Les valeurs $\lim_{adj}$ et $\lim_{opp}$ sont transmises au calculateur 67 qui établit une voie virtuelle 102 et détermine ensuite si le véhicule 2 sort de la voie virtuelle 102 indépendamment d'une intention du conducteur. Lorsque le véhicule 2 sort de la voie virtuelle 102, le signal d'alerte est adressé aux blocs 70 et 72 qui mettent en oeuvre les actions d'avertissement et de correction.

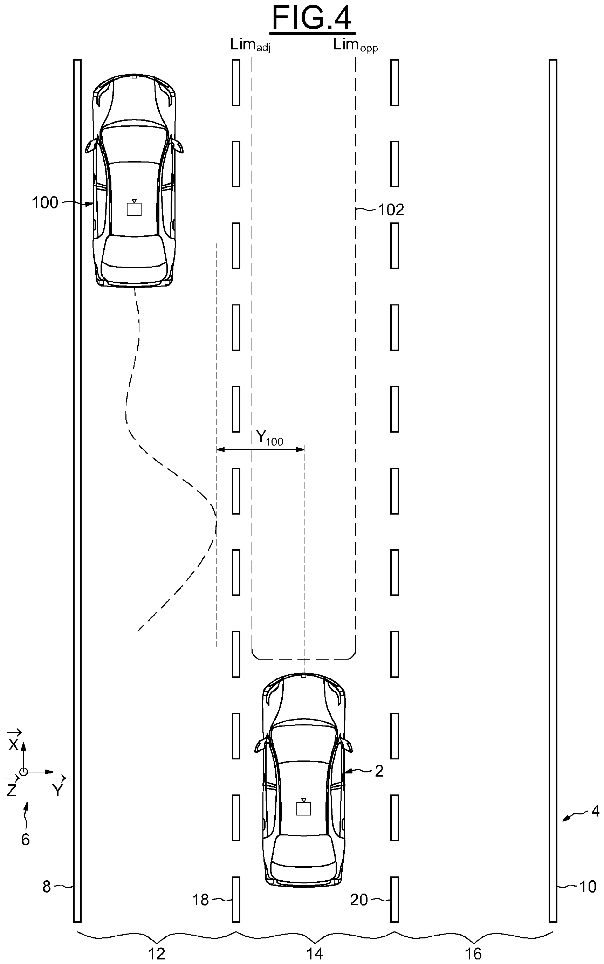

En référence à la figure 4, on a schématiquement représenté le véhicule 2 dans une deuxième situation de fonctionnement. Les éléments identiques portent les mêmes références. Par rapport à la situation de la figure 3, la trajectoire du véhicule 100 subit des fluctuations. Le décalage latéral $y_{100}$ subit les mêmes fluctuations. Dans ces conditions, le module 84 détermine un décalage latéral minimal $y_{100\_min}$ sur une durée prédéterminée. Le décalage $y_{100\_min}$ est ensuite utilisé comme en référence à la figure 3 pour déterminer les valeurs $\lim_{adj}$ et $\lim_{opp}$. En résultat, les fluctuations de la trajectoire du véhicule 100 ne sont pas répercutées sur les limites de la voie virtuelle 102.

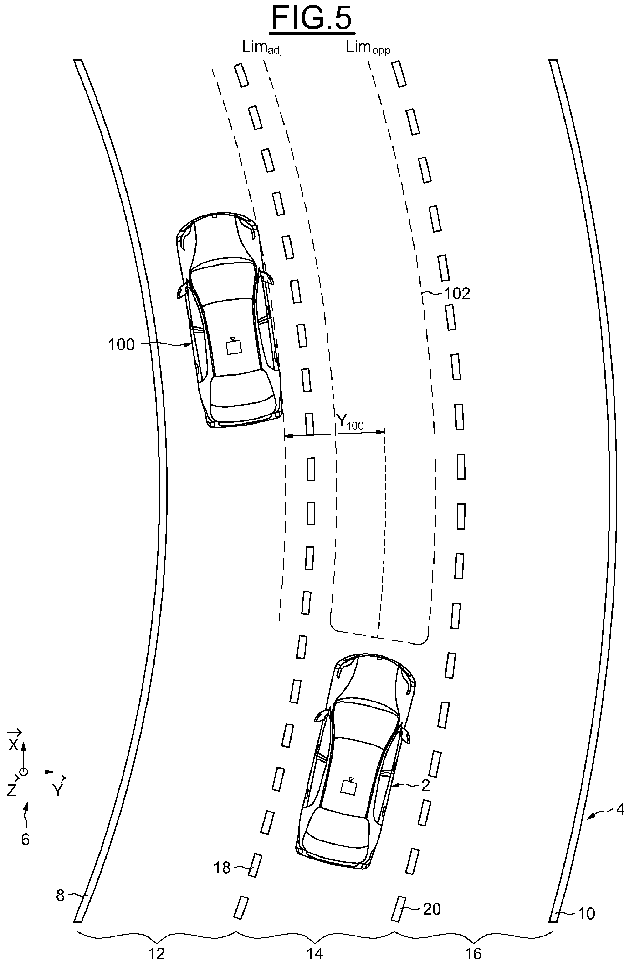

En référence à la figure 5, on a schématiquement représenté le véhicule 2 dans une troisième situation de fonctionnement. Les éléments identiques portent les mêmes références. Par rapport à la situation de la figure 3, la chaussée 4 comprend un virage à gauche. Le module 75 n'émet donc plus le signal $IMP_{75}$. A la place, le module 75 mesure les rayons $R_8$ et $R_{10}$ et calcule le rayon $R_{8\text{-}10}$. Le rayon $R_{8\text{-}10}$ est saisi dans la cartographie 90. En résultat, le rayon de courbure des limites de la voie virtuelle 102 est modulé de sorte à correspondant au rayon $R_{8\text{-}10}$.

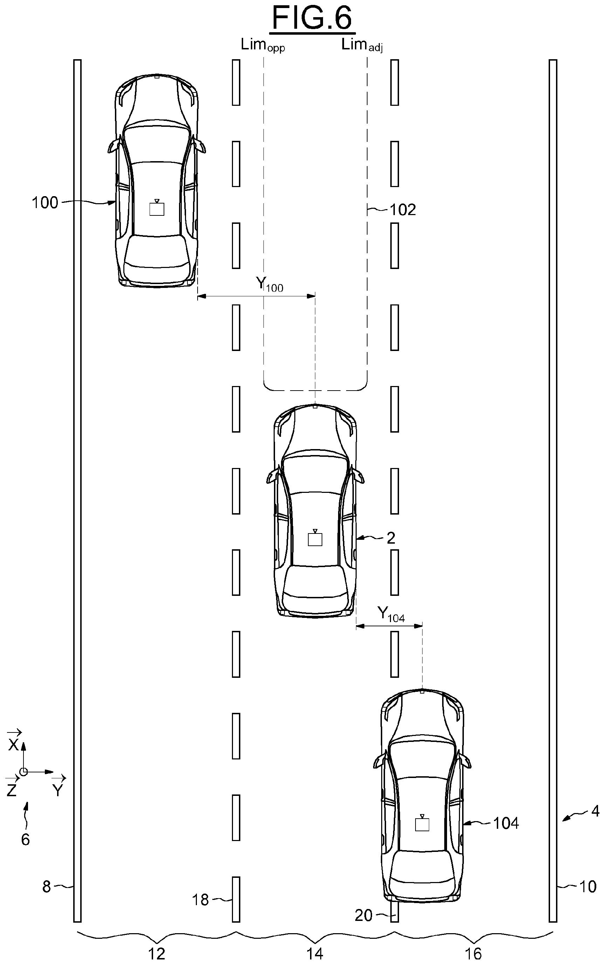

En référence à la figure 6, on a schématiquement représenté le véhicule 2 dans une quatrième situation de fonctionnement. Les éléments identiques portent les mêmes références. Par rapport à la situation de la figure 3, un troisième véhicule 104 circule sur la chaussée 4. Le véhicule 104 circule sur la voie 16, empiétant sur la ligne de délimitation 20. De ce fait, le décalage latéral $y_{104}$ du véhicule 104 est inférieur, en valeur absolue, au décalage $y_{100}$.

La vitesse du véhicule 104 est légèrement supérieure à la vitesse du véhicule 2 tandis que la vitesse du véhicule 100 est sensiblement égale à la vitesse du véhicule 2. Le module 76 calcule en conséquence un temps avant collision $TTC_{104}$ associé au véhicule 104 inférieur au temps avant collision $TTC_{100}$ associé au véhicule 100. En conséquence, seules les images représentant le véhicule 104 sont sélectionnées par le bloc minimum 80. Le moyen de calcul 82 ne tient alors pas compte du décalage latéral $y_{100}$ et les valeurs $lim_{adj}$ et $lim_{opp}$ sont établies en fonction du seul décalage $y_{104}$.

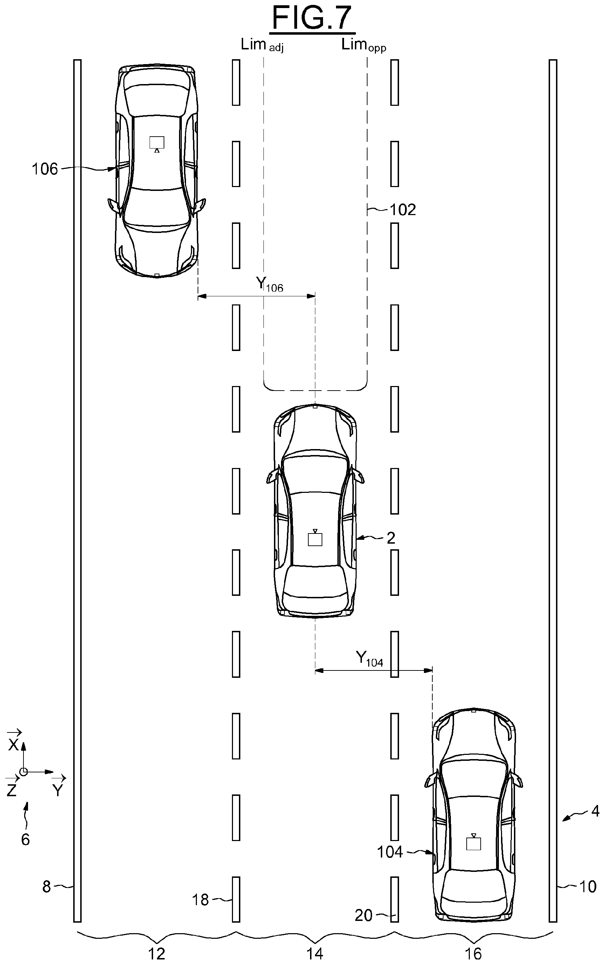

En référence à la figure 7, on a schématiquement représenté le véhicule 2 dans une cinquième situation de fonctionnement. Les éléments identiques portent les mêmes références. Le véhicule 100 des figures 3 à 6 a été remplacé par un véhicule 106 arrivant en sens inverse. Le véhicule 106 circule sur la chaussée 4 et sur la voie 12. Le véhicule 106 circule dans la direction du vecteur $\vec{x}$ dans un sens opposé à celui-ci. Bien que la distance entre les véhicules 106 et 2 soit relativement importante par rapport à la distance entre les véhicules 104 et 2, et que le décalage latéral $y_{106}$ associé au véhicule 106 ne soit pas inférieur en valeur absolue au décalage latéral $y_{104}$, le temps avant collision $TTC_{106}$ associé au véhicule 106 est plus faible que le temps $TTC_{104}$ du fait que le véhicule 104 est en sens inverse. En résultat, seules les images représentant le véhicule 106 seront sélectionnées par le bloc 80.

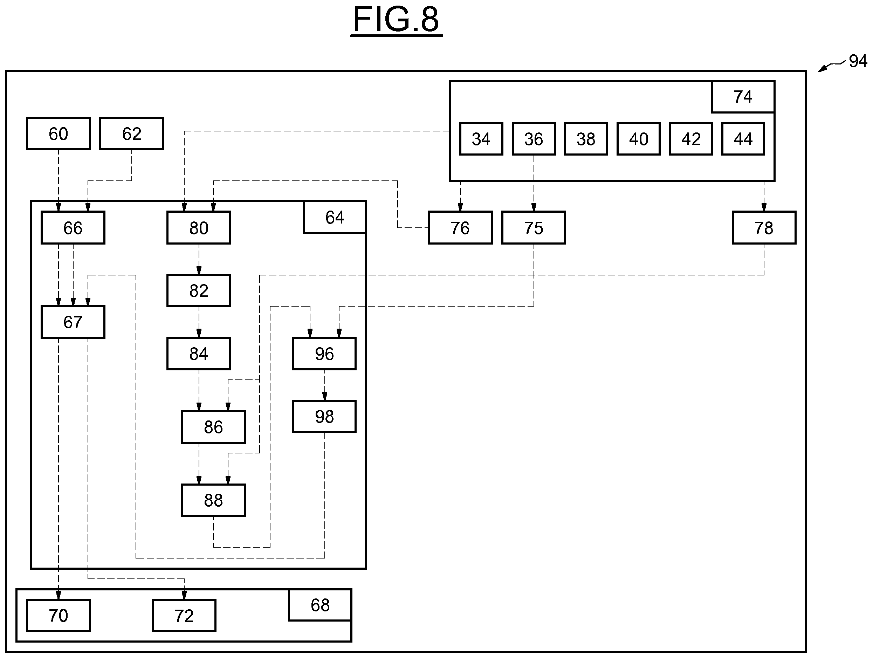

En référence à la figure 8, on a schématiquement représenté un dispositif d'aide à la conduite 94 selon un deuxième mode de réalisation de l'invention. Les éléments identiques portent les mêmes références. En particulier, le dispositif 94 peut être incorporé dans le véhicule 2 en lieu et place du dispositif 58.

Le dispositif 94 diffère du dispositif 58 en ce que la cartographie 90 est remplacée par deux cartographies 96 et 98. La cartographie 96 délivre une valeur de position adjacente $lim_{adj}$ de la même manière que la cartographie 90. La cartographie 96 ne délivre pas de valeur de position opposée $lim_{opp}$. La cartographie 98 est en liaison d'informations avec le module de saisie 32. En particulier, la cartographie 98 est informée par le module 32 d'un pays de circulation du véhicule 2. La cartographie 98 contient des valeurs d'une largeur de voie virtuelle en fonction d'un pays de circulation. La largeur de voie virtuelle est déterminée notamment en fonction d'une largeur standard des voies de circulation dans le pays de circulation du véhicule 2. De cette manière, la cartographie 98 délivre une largeur de voie virtuelle $w_{voie}$ et une valeur de position opposée $lim_{opp}$ en appliquant la relation :

$$\left| lim_{opp} \right| = - \left| lim_{adj} \right| + w_{voie} \text{ et signe}(lim_{opp}) = -signe(lim_{adj}).$$

Selon une variante de ce deuxième mode de réalisation, la cartographie 98 est informée par le GPS 30 d'un pays de circulation du véhicule 2.

Au vu de ce qui précède, le dispositif d'aide à la conduite selon l'invention permet de continuer à assurer une fonction LDW et/ou LKA même lorsque les lignes de délimitation des voies de circulation ne sont plus détectables. Cette amélioration des dispositifs d'aide à la conduite ne nécessite pas d'ajouter des composants particuliers autres que des composants logiciels. Cette amélioration peut donc être mise en oeuvre à des coûts particulièrement faibles.

**Revendications**

1. Dispositif d'aide à la conduite (58, 94) d'un véhicule automobile (2), comprenant un détecteur de ligne (60, 62) de délimitation d'une voie de circulation (12, 14, 16), un module d'établissement (64) apte à établir une voie virtuelle (102) à partir de la ligne détectée (18, 20), un module de surveillance (68) apte à surveiller un risque de sortie du véhicule automobile (2) de la voie virtuelle (102) établie, **caractérisé en ce qu'**il comprend un module d'acquisition (74) d'une image représentant un objet pertinent (100, 104, 106), le module d'établissement (64) comprenant une première cartographie (90, 96) contenant des valeurs d'une position ($lim_{adj}$, $lim_{opp}$) de limite de voie virtuelle (102) en fonction d'un décalage latéral ($y_{100}$, $y_{104}$, $y_{106}$) de l'objet pertinent sur l'image acquise, le module d'acquisition (64) étant configuré pour acquérir une pluralité d'images représentant l'objet pertinent (100, 102, 104), le dispositif (58) comprenant un module de sélection (84) d'un décalage latéral minimal de l'objet pertinent (100, 104, 106) sur la pluralité d'images acquises.

2. Dispositif (94) selon la revendication 1, dans lequel le module d'établissement (64) comprend en outre une deuxième cartographie (98) contenant des valeurs d'une largeur ($w_{voie}$) de voie virtuelle en fonction d'un pays de circulation du véhicule.

3. Dispositif (58) selon la revendication 1 ou 2, dans lequel la première cartographie (90) est configurée pour délivrer une valeur de position ($lim_{adj}$, $lim_{opp}$) de limite de voie virtuelle (102) en appliquant la relation :

$$\lim_{adj} = y/2,$$

$$\lim_{opp} = -\lim_{adj},$$

où $\lim_{adj}$ est la position, relativement par rapport à un plan de symétrie transversal du véhicule automobile (2), d'une limite de voie virtuelle (102) d'un côté adjacent à l'objet pertinent (100, 104, 106) ;

$\lim_{opp}$ est la position relativement par rapport au plan de symétrie transversal d'une limite de voie virtuelle (102) d'un côté opposé à l'objet pertinent (100, 104, 106), et

y est le décalage latéral de l'objet pertinent par rapport au module d'acquisition.

4. Dispositif (58) selon la revendication 3, dans lequel la première cartographie (90) est configurée pour modifier la valeur de la position ($\lim_{opp}$) d'une limite de voie virtuelle (102) d'un côté opposé à l'objet pertinent (100, 104, 106) si la valeur absolue de la position ($\lim_{adj}$) d'une limite de voie virtuelle (102) d'un côté adjacent à l'objet pertinent (100, 104, 106) diminue à un taux de variation inférieur à un seuil prédéfini (var) ou si la somme des valeurs absolues des limites ($\lim_{adj}$, $\lim_{opp}$) de la voie virtuelle est inférieure à une grandeur de sécurité prédéfinie ($w_{voie\_min}$).

5. Dispositif (58, 94) selon l'une quelconque des revendications 1 à 4, comprenant en outre un module de mesure (75) d'une courbure d'un bord de route (8, 10), ladite première cartographie (90) délivrant différentes valeurs d'une position de limite ($\lim_{adj}$, $\lim_{opp}$) de voie virtuelle (102) en fonction d'une courbure ($R_{8-10}$) mesurée par le module de mesure (75).

6. Dispositif (58, 94) selon l'une quelconque des revendications 1 à 5, comprenant en outre un module de calcul (76) d'un temps avant collision avec un objet pertinent (100, 104, 106), le module d'établissement (64) étant configuré pour saisir dans la première cartographie (90), lorsque plusieurs objets pertinents (100, 104, 106) peuvent être utilisés, le décalage latéral ($y_{104}$, $y_{106}$) de l'objet pertinent (104, 106) ayant le temps avant collision le plus faible.

7. Dispositif (58, 94) selon l'une quelconque des revendications 1 à 6, comprenant un module d'identification (78) apte à détecter une variation du décalage latéral d'un premier bord de route (8, 10) par rapport à un second bord de route (10, 8).

8. Dispositif (58, 94) selon la revendication 7, dans lequel le module d'établissement (64) est configuré pour mettre en oeuvre, lorsque le module d'identification (78) détecte une portion de diminution du nombre de voies de circulation, une interpolation du décalage latéral de l'objet pertinent (100, 104, 106) entre un début et une fin de la portion de diminution, et/ou dans lequel le module d'établissement (64) est configuré pour inhiber le fonctionnement du dispositif (58) lorsque le module d'identification (78) détecte une portion d'augmentation du nombre de voies de circulation, entre un début et une fin de la portion d'augmentation.

9. Procédé d'aide à la conduite d'un véhicule automobile (2), dans lequel :

   - on détecte une ligne de délimitation (18, 20) d'une voie de circulation (12, 14, 16),
   - on établit une voie virtuelle à partir de la ligne détectée (18, 20),
   - on surveille un risque de sortie du véhicule automobile (2) de la voie virtuelle établie,

   **caractérisé en ce que** s'il n'est pas possible de détecter une ligne de délimitation, on acquiert une pluralité d'images représentant un objet pertinent (100, 104, 106) l'on sélectionne un décalage latéral minimal de l'objet pertinent (100, 104, 106) sur la pluralité d'images acquises et l'on établit une voie virtuelle (102) à partir du décalage latéral minimal sélectionné.

**Patentansprüche**

1. Fahrassistenzvorrichtung (58, 94) eines Kraftfahrzeugs (2), beinhaltend eine Einheit zum Detektieren (60, 62) einer Begrenzungslinie einer Fahrspur (12, 14, 16), ein Erstellungsmodul (64), das dazu fähig ist, anhand der detektierten Linie (18, 20) eine virtuelle Spur (102) zu erstellen, ein Überwachungsmodul (68), das dazu fähig ist, ein Risiko, dass das Kraftfahrzeug (2) die erstellte virtuelle Spur (102) verlässt, zu überwachen, **dadurch gekennzeichnet, dass** sie ein Modul zum Erfassen (74) eines Bildes, das ein relevantes Objekt (100, 104, 106) darstellt, beinhaltet, wobei das Erstellungsmodul (64) eine erste Kartographie (90, 96) beinhaltet, die Werte einer Grenzposition ($lim_{adj}$, $lim_{opp}$) einer virtuellen Spur (102) in Abhängigkeit von einem seitlichen Versatz ($y_{100}$, $y_{104}$, $y_{106}$) des relevanten Objekts auf dem erfassten Bild enthält, wobei das Erfassungsmodul (64) dazu konfiguriert ist, eine Vielzahl von Bildern, die das relevante Objekt (100, 102, 104) darstellen, zu erfassen, wobei die Vorrichtung (58) ein Modul zum Auswählen (84) eines minimalen seitlichen Versatzes des relevanten Objekts (100, 104, 106) auf der Vielzahl von erfassten Bildern beinhaltet.

2. Vorrichtung (94) nach Anspruch 1, wobei das Erstellungsmodul (64) ferner eine zweite Kartographie (98) beinhaltet, die Werte einer Breite ($w_{Spur}$) einer virtuellen Spur in Abhängigkeit von dem Land, in dem das Fahrzeug fährt, enthält.

3. Vorrichtung (58) nach Anspruch 1 oder 2, wobei die erste Kartographie (90) dazu konfiguriert ist, einen Wert einer Grenzposition ($lim_{adj}$, $lim_{opp}$) einer virtuellen Spur (102) durch Anwenden der folgenden Gleichung bereitzustellen:

$$lim_{adj} = y/2,$$

$$lim_{opp} = -lim_{adj},$$

wobei $lim_{adj}$ die Position, relativ zu einer Quersymmetrieebene des Kraftfahrzeugs (2), einer Grenze einer virtuellen Spur (102) auf einer dem relevanten Objekt (100, 104, 106) zugewandten Seite ist;
$lim_{opp}$ die Position, relativ zu der Quersymmetrieebene, einer Grenze einer virtuellen Spur (102) auf einer zu dem relevanten Objekt (100, 104, 106) entgegengesetzten Seite ist und
y der seitliche Versatz des relevanten Objekts in Bezug auf das Erfassungsmodul ist.

4. Vorrichtung (58) nach Anspruch 3, wobei die erste Kartographie (90) dazu konfiguriert ist, den Wert der Position ($lim_{opp}$) einer Grenze einer virtuellen Spur (102) auf einer zu dem relevanten Objekt (100, 104, 106) entgegengesetzten Seite zu modifizieren, wenn sich der Absolutwert der Position ($lim_{adj}$) einer Grenze einer virtuellen Spur (102) auf einer dem relevanten Objekt (100, 104, 106) zugewandten Seite auf einen Differenzenquotienten verringert, der kleiner als ein vordefinierter Schwellenwert (var) ist, oder wenn die Summe der Absolutwerte der Grenzen ($lim_{adj}$, $lim_{opp}$) der virtuellen Spur kleiner als eine vordefinierte Sicherheitsgröße ($w_{Spur\_min}$) ist.

5. Vorrichtung (58, 94) nach einem beliebigen der Ansprüche 1 bis 4, ferner beinhaltend ein Modul zum Messen (75) einer Krümmung eines Straßenrandes (8, 10), wobei die erste Kartographie (90) in Abhängigkeit von einer durch das Messmodul (75) gemessenen Krümmung ($R_{8-10}$) unterschiedliche Werte einer Grenzposition ($lim_{adj}$, $lim_{opp}$) einer virtuellen Spur (102) bereitstellt.

6. Vorrichtung (58, 94) nach einem beliebigen der Ansprüche 1 bis 5, ferner beinhaltend ein Modul zum Berechnen (76) einer Zeit bis zu einem Zusammenstoß mit einem relevanten Objekt (100, 104, 106), wobei das Erstellungsmodul (64) dazu konfiguriert ist, wenn mehrere relevante Objekte (100, 104, 106) verwendet werden können, in der ersten Kartographie (90) den seitlichen Versatz ($y_{104}$, $y_{106}$) des relevanten Objekts (104, 106) auszuwählen, der die kürzeste Zeit bis zu einem Zusammenstoß aufweist.

7. Vorrichtung (58, 94) nach einem beliebigen der Ansprüche 1 bis 6, beinhaltend ein Identifikationsmodul (78), das dazu fähig ist, eine Änderung des seitlichen Versatzes eines ersten Straßenrandes (8, 10) mit Bezug auf einen zweiten Straßenrand (10, 8) zu detektieren.

8. Vorrichtung (58, 94) nach Anspruch 7, wobei das Erstellungsmodul (64) dazu konfiguriert ist, bei Detektion, durch das Identifikationsmodul (78), eines Abschnitts mit einer Verringerung der Anzahl von Fahrspuren eine Interpolation des seitlichen Versatzes des relevanten Objekts (100, 104, 106) zwischen einem Anfang und einem Ende des Verringerungsabschnitts durchzuführen, und/oder wobei das Erstellungsmodul (64) dazu konfiguriert ist, bei Detektion, durch das Identifikationsmodul (78), eines Abschnitts mit einer Erhöhung der Anzahl von Fahrspuren den Betrieb der Vorrichtung (58) zwischen einem Anfang und einem Ende des Erhöhungsabschnitts zu unterdrücken.

9. Fahrassistenzverfahren für ein Kraftfahrzeug (2), wobei:

- eine Begrenzungslinie (18, 20) einer Fahrspur (12, 14, 16) detektiert wird,
- anhand der detektierten Linie (18, 20) eine virtuelle Spur erstellt wird,

- ein Risiko, dass das Kraftfahrzeug (2) die erstellte virtuelle Spur verlässt, überwacht wird,

**dadurch gekennzeichnet, dass**, wenn es nicht möglich ist, eine Begrenzungslinie zu detektieren, eine Vielzahl von Bildern, die ein relevantes Objekt (100, 104, 106) darstellen, erfasst wird, auf der Vielzahl von erfassten Bildern ein minimaler seitlicher Versatz des relevanten Objekts (100, 104, 106) ausgewählt wird und anhand des ausgewählten minimalen seitlichen Versatzes eine virtuelle Spur (102) erstellt wird.

**Claims**

1. Device for assisting in the driving (58, 94) of a motor vehicle (2), comprising a line detector (60, 62) for detecting a boundary line of a traffic lane (12, 14, 16), a setup module (64) capable of setting up a virtual lane (102) on the basis of the line detected (18, 20), a monitoring module (68) capable of monitoring the risk of the motor vehicle (2) leaving the virtual lane (102) set up, **characterized in that** the device comprises an acquisition module (74) for acquiring an image representative of a relevant object (100, 104, 106), the setup module (64) comprising a first map (90, 96) containing values of a position ($lim_{adj}$, $lim_{opp}$) of a virtual lane (102) boundary according to a lateral shift ($y_{100}$, $y_{104}$, $y_{106}$) of the relevant object in the acquired image, the acquisition module (64) being configured to acquire a plurality of images representative of the relevant object (100, 102, 104), the device (58) comprising a selector module (84) for selecting a minimum lateral shift of the relevant object (100, 104, 106) across the plurality of acquired images.

2. Device (94) according to Claim 1, wherein the setup module (64) further comprises a second map (98) containing values of a virtual lane width ($w_{voie}$) according to the country in which the vehicle is driving.

3. Device (58) according to Claim 1 or 2, wherein the first map (90) is configured to deliver a value of a position ($lim_{adj}$, $lim_{opp}$) of a virtual lane (102) boundary by applying the relationship:

$$lim_{adj} = y/2,$$

$$lim_{opp} = - lim_{adj},$$

where $lim_{adj}$ is the relative position, with respect to a transverse plane of symmetry of the motor vehicle (2), of a virtual lane (102) boundary on a side adjacent to the relevant object (100, 104, 106);
$lim_{opp}$ is the relative position with respect to the transverse plane of symmetry of a virtual lane (102) boundary on a side opposite the relevant object (100, 104, 106), and
y is the lateral shift of the relevant object with respect to the acquisition module.

4. Device (58) according to Claim 3, wherein the first map (90) is configured to modify the value of the position ($lim_{opp}$) of a virtual lane (102) boundary on a side opposite the relevant object (100, 104, 106) if the absolute value of the position ($lim_{adj}$) of a virtual lane (102) boundary on a side adjacent to the relevant object (100, 104, 106) decreases by a rate of change that is lower than a predefined threshold (var) or if the sum of the absolute values of the boundaries ($lim_{adj}$, $lim_{opp}$) of the virtual lane is smaller than a predefined safety quantity ($w_{voie\_min}$).

5. Device (58, 94) according to any one of Claims 1 to 4, further comprising a measurement module (75) for measuring a curvature of a roadside (8, 10), said first map (90) delivering various values of a virtual lane (102) boundary position ($lim_{adj}$, $lim_{opp}$) according to a curvature ($R_{8-10}$) measured by the measurement module (75).

6. Device (58, 94) according to any one of Claims 1 to 5, further comprising a calculator module (76) for calculating a time to collision with a relevant object (100, 104, 106), the setup module (64) being configured to input, into the first map (90), when a plurality of relevant objects (100, 104, 106) may be used, the lateral shift ($y_{104}$, $y_{106}$) of the relevant object (104, 106) for which the time to collision is the shortest.

7. Device (58, 94) according to any one of Claims 1 to 6, comprising an identifier module (78) capable of detecting a change in the lateral shift of a first roadside (8, 10) relative to a second roadside (10, 8).

8. Device (58, 94) according to Claim 7, wherein the setup module (64) is configured to interpolate, when the identifier module (78) detects a section in which the number of traffic lanes decreases, the lateral shift of the relevant object (100, 104, 106) between a beginning and an end of the section of decrease, and/or wherein the setup module (64) is configured to inhibit the operation of the device (58) when the identifier module (78) detects a section in which the number of traffic lanes increases between a beginning and an end of the section of increase.

9. Method for assisting in the driving of a motor vehicle (2), wherein:

   - a boundary line (18, 20) of a traffic lane (12, 14, 16) is detected,
   - a virtual lane is set up on the basis of the line detected (18, 20),
   - the risk of the motor vehicle (2) leaving the virtual lane set up is monitored,

   **characterized in that** if it is not possible to detect a boundary line, a plurality of images representative of a relevant object (100, 104, 106) is acquired, a minimum lateral shift of the relevant object (100, 104, 106) across the plurality of acquired images is selected and a virtual lane (102) is set up on the basis of the selected minimum lateral shift.

# FIG.1

FIG.2

# FIG.3

# FIG.4

# FIG.5

# FIG.6

EP 3 755 593 B1

# FIG.7

19

# FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3127771 A
- US 2007198188 A
- US 2009326752 A
- US 2011022317 A